# FASCICULE DE BREVET EUROPEEN

(11) **EP 1 594 809 B1**
(45) Date de publication et mention de la délivrance du brevet: **05.01.2011**
(21) Numéro de dépôt: 04701977.3
(22) Date de dépôt: 14.01.2004
(51) Int. Cl.: C03B 37/02

(54) **DISPOSITIF D ECHANGE THERMIQUE POUR CABINE DE FIBRAGE**
WÄRMEAUSTAUSCHVORRICHTUNG FÜR EINE FASERZIEHKABINE
HEAT EXCHANGE DEVICE FOR A FIBER-DRAWING BOOTH

(30) Priorité: 15.01.2003 FR 0300380
(43) Date de publication de la demande: 16.11.2005
(73) Titulaire: Saint-Gobain Technical Fabrics Europe, 73000 Chambéry (FR)
(72) Inventeur: XU, David Xiaoqiang, F-59700 Marcq en Baroeul (FR); DELEPLACE, Pierre, F-73170 Yenne (FR); MARSAULT, Nicolas, 74160 COLLONGES SOUS SALEVE (FR)
(74) Mandataire: Jamet, Vincent
(86) Numéro de dépôt international: PCT/FR2004/000052
(87) Numéro de publication internationale: WO 2004/071978

(56) Documents cités:
- US-A- 3 345 147
- US-A- 4 214 884

## Description

La présente invention est relative à des perfectionnements apportés aux cabines de fibrage destinées à la fabrication de filaments de verre. On rappelle qu'une cabine de fibrage est de manière connue en soi constituée d'au moins une filière percée d'une pluralité de trous au travers desquels s'écoule du verre fondu de manière à former une nappe de filaments de verre.

Plus particulièrement, la présente invention vise un dispositif d'échange thermique adapté pour être positionné en dessous du fond de la filière, cette dernière étant elle-même située au sein de la cabine de fibrage.

Or, la conduite d'une cabine de fibrage est un processus particulièrement complexe au cours duquel de nombreux paramètres physico-chimiques sont constamment contrôlés. A ce titre, on relève notamment que la température du fond de la filière est l'un des paramètres les plus importants pour l'obtention d'un filament optimal, elle conditionne en effet la viscosité du verre.

A cette fin, il est donc nécessaire de procéder à un refroidissement du dessous de la filière afin de figer la température des bulbes de fibres de verre.

Par ailleurs, d'autres phénomènes influent sur la température du bulbe des filaments et qui nécessitent l'incorporation de dispositifs d'échange thermique en dessous du fond de filière.

Ainsi, dans une cabine de fibrage, le mouvement des filaments entraîne l'air piégé dans la nappe vers l'extérieur de la cabine, ce qui crée une aspiration d'air de l'extérieur vers l'intérieur de la nappe en dessous du fond de filière. Il est nécessaire d'alimenter en air neuf pour compenser ce déficit d'air au-dessous du fond de filière de manière à assurer un échange thermique homogène avec les bulbes de verre et le fond de filière, permettant ainsi d'améliorer la régularité du titre.

Une première famille de dispositifs connus d'échange thermique permettant d'influer sur la température du fond de filière, mais n'assurant pas la fonction d'alimentation en air, est constitué par un réseau d'ailettes formant des peignes. Chacune des ailettes est réalisée à partir d'un barreau formé d'un matériau possédant d 'excellents coefficients d'échange thermique (notamment au niveau de la conduction), l'une des extrémités libres de chaque barreau étant reliée à un collecteur solidaire de la cabine de fibrage au niveau du dessous du fond de filière et pourvu d'un circuit de fluide caloporteur, permettant ainsi d'évacuer les calories extraites par conduction, les filaments de verre circulant entre les interstices libres du peigne.

Bien qu'il réponde aux exigences actuelles en matière de refroidissement du dessous du fond de filière, cette première famille de dispositif n'est pas transposable pour les filières de forte tirée. Des problèmes liés à la géométrie des cabines de fibrage (les dimensions de la zone de la cabine destinée à recevoir la filière sont figées par construction) rendent difficilement possible le montage de ces dispositifs pour des filières comportant un grand nombre d'orifices (plusieurs milliers), ce problème est d'autant plus exacerbé lorsqu'il s'agit en plus d'apporter un complément d'air, ce qui est indispensable pour les filières de forte tirée.

On connaît par ailleurs une seconde famille de dispositifs de d'échange thermique qui assurent à la fois la fonction de refroidissement du bulbe de verre mais aussi la fonction d'amenée d'air. Il s'agit d'ailettes soufflantes. Ces dernières sont également conformées en peigne et sont situées au-dessous du fond de filière, les filaments de verre passant au travers des espaces libres définis entre les rangés d'ailettes.

Des ailettes de refroidissement sont connues par les brevets US 3 150 946 et US 3 345 147. Or, selon ces documents, les ailettes sont faites à partir d'un tissu métallique qui est plié de façon tubulaire pour former l'ailette. Or le pliage déforme certaines mailles. Elles ne sont donc plus de même dimension et l'écoulement engendré par le soufflage n'est plus uniforme.

Par le brevet US 5 693 118, on connaît un dispositif d'ailettes aspirantes qui permet d'augmenter l'échange thermique convectif au-dessous du fond de filière. L'aspiration d'air par les ailettes génère un écoulement uniforme sous la filière et améliore la stabilité du fibrage. Par contre, l'aspiration d'air par les ailettes favorise le dépôt des matières volatiles (poussières) sur la surface des ailettes, la pénétration des poussières et des gouttelettes d'eau dans la nappe, qui sont des facteurs connus d'instabilité de la nappe.

Les brevets US 4 214 884 et US 4 310 602 concernent des ailettes fabriquées à partir d'une fine plaque en nickel massif. Les trous, de dimensions identiques et précises, sont obtenus par un procédé photochimique ou électrolytique.

Malgré le soin apporté à la fabrication de ces trous, leur densité n'est pas suffisante pour garantir à l'écoulement aéraulique des conditions optimales (homogénéité) qui garantissent la stabilité de la nappe de filaments de verre.

La présente invention vise donc à pallier ces inconvénients en proposant un dispositif d'échange thermique destiné à être positionné en dessous du fond d'une filière, notamment de forte tirée, ce dispositif d'échange thermique étant adapté pour garantir des conditions de fibrage optimales de la nappe de filaments traversant ladite filière.

A cet effet, le dispositif d'échange thermique, objet de l'invention, est selon la revendication 1.

Grâce à ces dispositions, il est possible d'obtenir un refroidissement optimal du bulbe de verre sortant du fond de filière à l'aide d'un mouvement de convection résultant du soufflage du fluide.

Dans des modes de réalisation préférés de l'invention, on peut éventuellement avoir recours en outre à l'une et/ou à l'autre des dispositions selon les revendications 2 à 12.

D'autres caractéristiques et avantages de l'invention apparaîtront au cours de la description suivante d'une de ses formes de réalisation, donnée à titre d'exemple non limitatif, en regard des dessins joints. Sur les dessins :
- la figure 1 est une vue en perspective d'un dispositif d'échange thermique selon l'invention,
- la figure 2 est une courbe qui illustre l'évolution de la tirée d'une filière en fonction de l'augmentation de la température de consigne de la filière, et pour différents débits d'air de refroidissement au travers de l'ailette,
- la figure 3 est une courbe qui illustre l'évolution de la puissance thermique susceptible d'être évacuée par une ailette soufflante en fonction du débit de soufflage du fluide de soufflage et en fonction de l'écart de température entre un point de l'ailette et l'air soufflé,
- les figures 4 et 5 sont des photographies illustrant l'évolution de la forme du bulbe pour diverses températures et divers débits de fluide de soufflage, pour deux positions différentes de bulbe sur l'ailette.

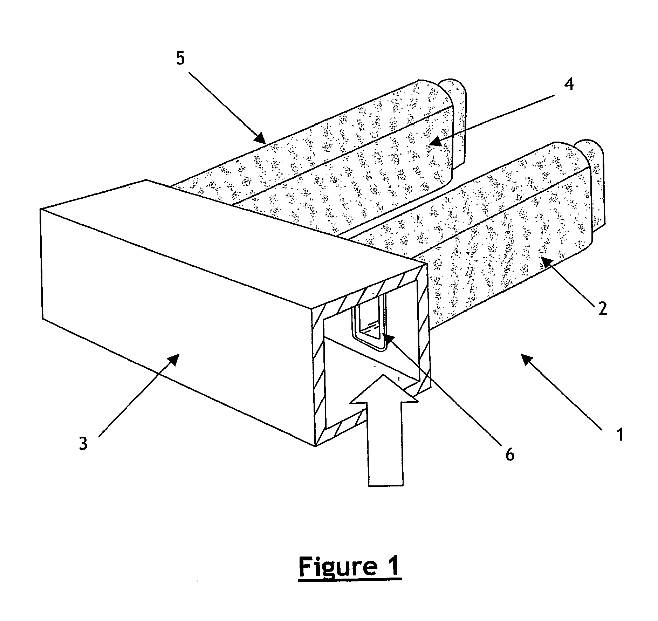

Sur la figure 1, on a représenté le dispositif d'échange thermique 1 selon l'invention. Celui-ci comporte essentiellement une pluralité d'ailettes 2 (pour une meilleure compréhension du dessin, seulement deux ailettes ont été représentées) et un collecteur 3. Chacune des ailettes, au niveau de l'une de ses extrémités libres, est rendue solidaire par des moyens connus (par soudage, par brasage, par collage) au niveau de l'une des parois du collecteur de manière à conformer un peigne, dans ce mode de réalisation particulière. Il va de soi que ce dispositif d'échange thermique peut prendre différentes configurations autres que celle du peigne, il peut ainsi s'agir d'un cadre ou d'une portion de cadre incorporant lesdites ailettes.

Ce dispositif d'échange thermique est destiné à être positionné en dessous et au voisinage du fond d'une filière dans une cabine de fibrage. Le pas entre les ailettes correspond sensiblement à l'écartement des tétons de fibrage situés en fond de filière de manière à ce que les filaments de verre fondu cheminent sensiblement dans un plan positionné de manière coplanaire et équidistante entre deux ailettes juxtaposées.

Chaque ailette est de forme sensiblement parallélépipédique de section droite tubulaire et présente des petites et des grandes parois 4, 5 deux à deux parallèles, les grandes parois 4, 5 étant cependant destinées à faire face aux filaments. Dans l'exemple représenté en figure 1, l'ailette est de section droite rectangulaire et le canal intérieur 6 défini entre les parois 4, 5 de l'ailette permet le passage d'un fluide de soufflage comprimé (tel que notamment de l'air ou de l'azote). Ce fluide de soufflage subit au préalable un traitement permettant d'ôter toutes particules néfastes qui auraient tendance à colmater les pores de l'ailette (air déshuilé, air dépoussiéré). Le fluide de soufflage peut aussi résulter de la vaporisation d'un fluide initialement à l'état liquide (eau, alcool, éthylène glycol, acétone, ce fluide étant utilisé pur ou en mélange), cette vaporisation ayant lieu au sein de l'ailette : ce type de fluide de soufflage est intéressant car il permet d'utiliser la chaleur latente de vaporisation du fluide. Chacun des canaux de chacune des ailettes est relié au collecteur lors de la réalisation du peigne, le peigne étant lui-même pourvu au niveau du collecteur d'un dispositif de connexion au fluide de soufflage qui est distribué au niveau de la cabine de fibrage.

Selon un premier mode de réalisation de l'invention, l'ailette est obtenue par frittage d'une poudre de matériau métallique, notamment un mélange de poudre d'inox, de laiton, de nickel, dont la granulométrie est inférieure à 100 µm et de préférence comprise dans la fourchette de 10 à 80 µm.

La porosité ouverte recherchée avec ce type de poudre est comprise dans la fourchette entre 15 et 20%, et sensiblement voisine de 17%.

L'épaisseur des parois tubulaires de l'ailette est sensiblement voisine de 1 mm.

A l'aide de ces ailettes, on a pu mesurer de part et d'autre de chacune des grandes faces de l'ailette une perméabilité d'air mesurée sous 0,5 bar et à 0°C comprise dans la gamme de 300 à 1500 Nm³/h/m², notamment comprise dans la gamme de 300 à 800 Nm³/h/m², et de préférence comprise dans la gamme 500 à 600 Nm³/h/m², ce qui représente des vitesses d'écoulement comprises entre 0,08 et 0,2 m/s pour la première fourchette de valeur de perméabilité. La pression de fonctionnement de l'ailette et donc du peigne qui incorpore au moins une de ces ailettes est comprise entre 0,1 et 6 bars, de préférence entre 0,2 et 4 bars.

Selon un deuxième mode de réalisation, l'ailette est obtenue par feuilletage d'un tissu métallique, notamment entre au moins 3 à 18 couches, notamment entre au moins 3 à 6 couches de tissu assemblées par compression ou par frittage. La maille du tissu s'étend sensiblement dans la gamme de 1 à 30 µm.

La porosité ouverte recherchée avec ce feuilletage de tissu métallique est comprise entre 15 et 20%.

De même, à l'aide de ces ailettes, on a pu mesurer sur chacune des grandes faces de l'ailette une perméabilité d'air sous 0,5 bar et à 0°C comprise dans la gamme de 300 à 1500 Nm³/h/m², notamment comprise dans la gamme de 300 à 800 Nm³/h/m², de préférence comprise dans la gamme 500 à 600 Nm³/h/m², ce qui représente des vitesses d'écoulement comprises entre 0,08 et 0,2 m/s (pour la première gamme de valeurs de perméabilité). La pression de fonctionnement de l'ailette et donc du peigne incorporant au moins une de ces ailettes est comprise entre 0,1 et 6 bars, de préférence entre 0,2 et 4 bars.

A partir de cette fabrication, il a été possible de déterminer un certain nombre de caractéristiques de l'écoulement du fluide de soufflage au travers de chaque côté des grandes parois de l'ailette.

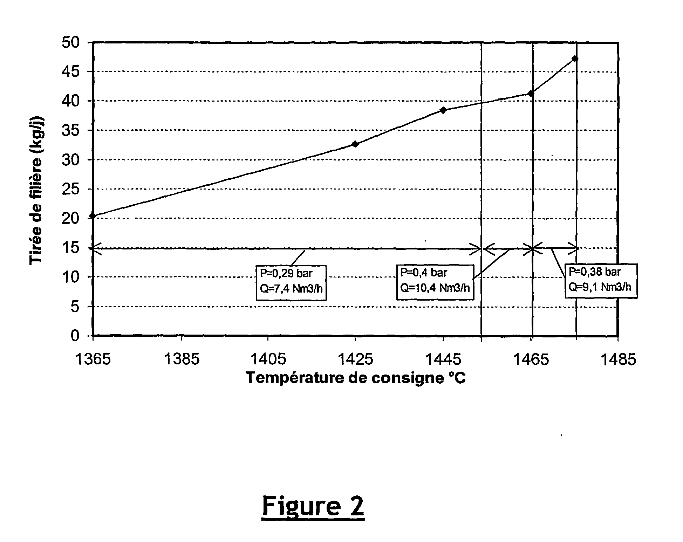

Ainsi, la figure 2 montre l'évolution de la tirée de la filière en fonction de l'augmentation de la température de consigne du fond de filière pour différents débits de fluide de soufflage au travers d'une paroi de l'ailette. Les données relatives à la filière illustrée en figure 2 et suivantes sont données à titre indicatif, la filière en question étant une filière de laboratoire, alimentée en calcin de verre alcali résistant.

La tirée de filière augmente progressivement lors de l'accroissement de la température de consigne de filière. A la température limite pouvant être supportée par la filière (1475 °C), en ajustant le débit de soufflage, on trouve une tirée maximale de filière de 47,2 kg/jour. Elle est 21 % plus élevée par rapport à la tirée maximale avec les ailettes classiques (39,1 kg/jour). Le gain de tirée avec les ailettes soufflantes est donc très important. Il faut indiquer que cette tirée maximale est plutôt limitée par la température de consigne maximale de la filière (1475°C), température de fusion de l'alliage constituant la filière.

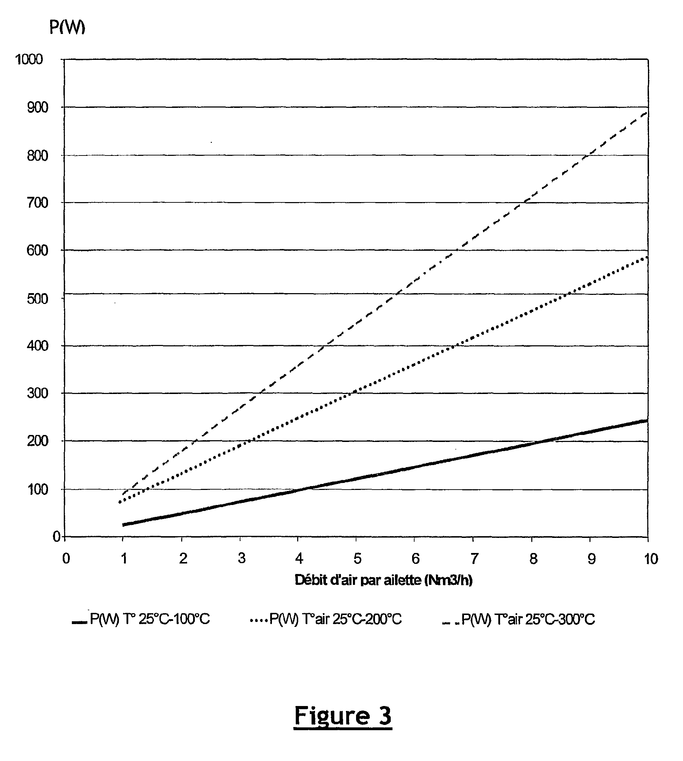

L'augmentation de la tirée de la filière n'est pas seulement dépendante de la température du fluide de soufflage, qui procède à un refroidissement par convection des ailettes. Lorsque le fluide de soufflage traverse les parois poreuses des ailettes, le fluide de soufflage frais (entré à 20 °C dans les ailettes) refroidit efficacement les ailettes et il peut maintenir une température des ailettes relativement basse en fonction du débit de soufflage. Cette basse température des ailettes soufflantes permet d'augmenter en même temps l'échange radiatif entre les bulbes et les ailettes soufflantes. Pour donner une idée de la capacité de refroidissement des ailettes soufflantes, dans la figure 3, on présente la puissance thermique susceptible d'être évacuée par une ailette soufflante en fonction du débit de soufflage du fluide de soufflage en supposant respectivement une température d'air autour des bulbes à 100 °C, 200°C et 300 °C. On remarque que, si une ailette souffle un débit de fluide de soufflage (en l'occurrence de l'air) de 5 m³/h, elle peut évacuer 120 W à 100 °C, 280 W à 200°C et 450 W à 300 °C. Ces données sont à rapprocher de la capacité de refroidissement d'une ailette connue de l'art antérieur, cette capacité de refroidissement étant limitée à une centaine de Watts.

Bien que l'augmentation de la tirée d'une filière constitue l'un des objectifs principaux recherchés par les utilisateurs, il convient cependant de ne pas perdre de vue que cette augmentation ne doit pas se faire à l'encontre de la stabilité de la filière, et principalement de la stabilité des bulbes formés sous le fond de filière. Or, la stabilité des bulbes est fonction de leur température, cette température étant elle-même fonction du débit du fluide de soufflage et de son homogénéité.

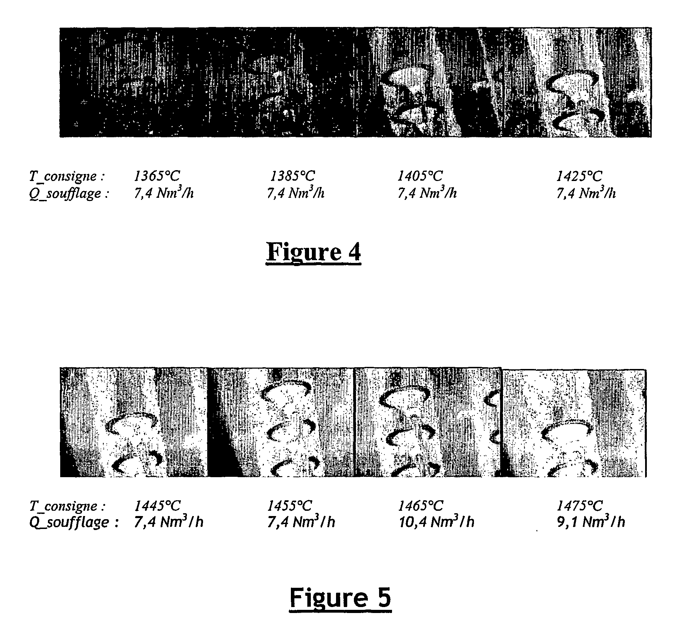

Comme on peut le voir sur les figures 4 et 5, on remarque que lorsque la température de consigne augmente, le bulbe représenté en figure 4 devient de plus en plus chaud. Il regagne progressivement son volume et devient de plus en plus droit. Pour le bulbe représenté en figure 5, le soufflage par les ailettes est plus doux et le bulbe est plus grand. Quand la température de consigne augmente, le bulbe s'agrandit et il commence à déborder autour du téton. A partir de 1465 °C, on est obligé de monter le débit d'air pour stabiliser le fibrage. Un phénomène extrêmement intéressant est observé : le bulbe est très stable et on ne voit pratiquement plus la pulsation du bulbe qu'on a observée avec des ailettes de l'art antérieur. On peut fibrer de façon stable même lorsque le bulbe déborde autour du téton. Lorsque le bulbe est extrêmement chaud, la pulsation réapparaît et une petite augmentation de soufflage permet de calmer immédiatement cette instabilité. De plus, pendant les essais, on remarque que l'on peut varier très facilement et très souplement la forme des bulbes en réglant le débit de soufflage par les ailettes. Ceci offre l'avantage d'une grande potentialité de réglage du titre du fil.

Bien entendu d'autres formes de réalisation non représentées sur les figures peuvent être envisagées surtout au niveau des formes, des sections, des gabarits des ailettes, De même au niveau du dispositif d'échange thermique et selon une variante également non représentée sur les figures, on prévoit d'incorporer au niveau du collecteur un circuit de refroidissement permettant grâce à la circulation d'un fluide caloporteur (tel que de l'eau par exemple) d'évacuer des calories supplémentaires.

L'invention précédemment décrite offre de multiples avantages :
- Augmenter le refroidissement du bulbe de verre et du fond de filière par le soufflage des ailettes. Ceci permet d'élargir la plage de température de fibrage. Le fibrage devient moins critique et plus stable ;
- Eviter les dépôts de matière volatile sur les surfaces des ailettes par le soufflage. Il permet de fournir des ailettes plus efficaces et plus économiques pour le fibrage de fils de verre. La production de fils peut ainsi se dégager principalement ou entièrement de la perturbation du nettoyage périodique des ailettes, ce qui améliore la productivité ;
- Fournir des ailettes dont le taux d'absorption de chaleur est réglable, permettant une absorption thermique optimale dans toutes les conditions de fonctionnement ;
- Fournir un moyen supplémentaire pour ajuster précisément le titre des filaments par le réglage de la pression de soufflage ;
- Compenser immédiatement, par l'air neuf soufflé au travers des ailettes, l'air aspiré de la zone de fibrage par l'étirage des filaments, ce qui permet de réduire ou d'empêcher l'entrée d'air de l'extérieur vers l'intérieur de la nappe de filaments dans cette zone sensible. Le fibrage peut ainsi se dégager des effets des perturbations turbulentes ou transitoires de l'écoulement d'air à l'extérieur de la nappe de filaments (par exemple : remontée de poussières). L'aéraulique dans la zone de fibrage devient plus stable et plus contrôlable.
- Avec des ailettes à soufflage uniforme et homogène, il est donc possible de fibrer avec une température plus élevée, il devient donc possible de diminuer la tension de fibrage tout en conservant la stabilité de la filière.

## Revendications

1. Dispositif d'échange thermique (1) comportant au moins une ailette (2) pourvue de moyens de soufflage d'un fluide, les moyens de soufflage étant uniformes et constitués par l'une au moins des parois (4, 5) de ladite ailette (2), ladite paroi (4, 5) étant à porosité ouverte, l'une au moins des parois (4, 5) du dispositif d'échange thermique étant obtenue par frittage d'une poudre métallique ou par feuilletage d'un tissu métallique, **caractérisé en ce que** la porosité ouverte de la paroi (4, 5) est comprise entre 15 et 20%.

2. Dispositif d'échange thermique (1) selon la revendications 1, **caractérisé en ce que** l'ailette (2) est de forme globalement parallélépipédique et de section droite tubulaire et possédant une perméabilité mesurée avec une pression d'air sous 0,5 bar et à 0 °C comprise dans la gamme de 300 à 1500 Nm³/h/m², notamment comprise dans la gamme de 300 à 800 Nm³/h/m².

3. Dispositif d'échange thermique (1) selon la revendication 2, **caractérisé en ce que** la perméabilité mesurée avec une pression d'air sous 0,5 bar et à 0 °C est comprise dans la gamme de 500 à 600 Nm³/h/m².

4. Dispositif d'échange thermique (1) selon l'une des revendications 1 à 3, **caractérisé en ce que** le champ de vitesse du fluide de soufflage est symétrique de part et d'autre de la paroi à porosité ouverte.

5. Dispositif d'échange thermique selon l'une des revendications 1 à 4, **caractérisé en ce que** l'une au moins des parois (4, 5) du dispositif d'échange thermique est obtenue par frittage d'une poudre métallique.

6. Dispositif d'échange thermique (1) selon la revendication 5, **caractérisé en ce que** la poudre métallique est à base d'un mélange de poudre d'inox, de laiton, de nickel, possédant une granulométrie inférieure à 100 µm et de préférence comprise dans la fourchette de 10 à 80 µm.

7. Dispositif d'échange thermique (1) selon la revendication 6, **caractérisé en ce que** la porosité ouverte est de l'ordre de 17 %.

8. Dispositif d'échange thermique (1) selon l'une des revendications 1 à 4, **caractérisé en ce que** l'une au moins des parois du dispositif d'échange thermique est obtenue par feuilletage d'un tissu métallique.

9. Dispositif d'échange thermique (1) selon la revendication 8, **caractérisé en ce que** le feuilletage comporte 3 à 18, notamment 3 à 6 couches de tissu métallique.

10. Dispositif d'échange thermique (1) selon l'une quelconque des revendications précédentes, **caractérisé en ce que** le fluide est de l'air à une pression comprise entre 0,1 et 6 bars, de préférence entre 0,2 et 4 bars.

11. Dispositif d'échange thermique (1) selon l'une quelconque des revendications 1 à 10, **caractérisé en ce que** le fluide de soufflage résulte de la vaporisation au sein de l'ailette (2) d'un fluide initialement à l'état liquide.

12. Dispositif d'échange thermique (1) selon l'une quelconque des revendications précédentes, **caractérisé en ce que** le dispositif d'échange thermique est pourvu d'un circuit de refroidissement auxiliaire.

## Claims

1. Heat exchanger device (1) comprising at least one fin (2) provided with means for blowing a fluid, the blowing means being uniform and consisting of at least one of the walls (4, 5) of said fin (2), said wall (4, 5) having open porosity, at least one of the walls (4, 5) of the heat exchanger device being obtained by sintering a metal powder or by laminating a metal gauze, **characterized in that** the open porosity of the wall (4, 5) is between 15 and 20%.

2. Heat exchanger device (1) according to Claim 1, **characterized in that** the fin (2) is of parallelepipedal overall shape and tubular cross section and has a permeability measured with air at a pressure of 0.5 bar and at 0°C lying in the range from 300 to 1500 Sm³/h/m², particularly lying in the range from 300 to 800 Sm³/h/m².

3. Heat exchanger device (1) according to Claim 2, **characterized in that** the permeability measured with air at a pressure of 0.5 bar and at 0°C lies in the range from 500 to 600 Sm³/h/m².

4. Heat exchanger device (1) according to one of Claims 1 to 3, **characterized in that** the blowing fluid velocity field is symmetric across the open porosity wall.

5. Heat exchanger device according to one of Claims 1 to 4, **characterized in that** at least one of the walls (4, 5) of the heat exchanger device is obtained by sintering a metal powder.

6. Heat exchanger device (1) according to Claim 5, **characterized in that** the metal powder is based on a mixture of powdered stainless steel, brass and nickel, with a particle size smaller than 100 µm and preferably with a particle size lying within the range from 10 to 80 µm.

7. Heat exchanger device (1) according to Claim 6, **characterized in that** the open porosity is of the order of 17%.

8. Heat exchanger device (1) according to one of Claims 1 to 4, **characterized in that** at least one of the walls of the heat exchanger device is obtained by laminating a metal gauze.

9. Heat exchanger device (1) according to Claim 8, **characterized in that** the lamination comprises 3 to 18, particularly 3 to 6, layers of metal gauze.

10. Heat exchanger device (1) according to any one of the preceding claims, **characterized in that** the fluid is air at a pressure of between 0.1 and 6 bar, preferably between 0.2 and 4 bar.

11. Heat exchanger device (1) according to any one of Claims 1 to 10, **characterized in that** the blowing fluid results from the vaporization within the fin (2) of a fluid that was initially in the liquid state.

12. Heat exchanger device (1) according to any one of the preceding claims, **characterized in that** the heat exchanger device is provided with an auxiliary cooling circuit.

## Patentansprüche

1. Wärmeaustauschvorrichtung (1) mit wenigstens einer Rippe (2), die mit Mitteln zum Ausblasen eines Fluids versehen ist, wobei die Blasmittel gleichförmig und von wenigstens einer der Wände (4, 5) der Rippe (2) gebildet sind, wobei die Wand (4, 5) offenporig ist, wobei wenigstens eine der Wände (4, 5) der Wärmeaustauschvorrichtung durch Sintern eines Metallpulvers oder durch Schichten eines Metallgewebes erhalten wird, **dadurch gekennzeichnet, dass** die Offenporigkeit der Wand (4, 5) 15 bis 20 % beträgt.

2. Wärmeaustauschvorrichtung (1) nach Anspruch 1, **dadurch gekennzeichnet, dass** die Rippe (2) insgesamt quaderförmig ausgebildet ist und einen rohrförmigen Querschnitt hat sowie eine mit einem Luftdruck unter 0,5 bar und bei 0 °C gemessene Durchlässigkeit im Bereich zwischen 300 und 1500 Nm³/h/m², insbesondere im Bereich zwischen 300 und 800 Nm³/h/m² aufweist.

3. Wärmeaustauschvorrichtung (1) nach Anspruch 2, **dadurch gekennzeichnet, dass** die mit einem Luftdruck unter 0,5 bar und bei 0 °C gemessene Durchlässigkeit im Bereich zwischen 500 und 600 Nm³/h/m² liegt.

4. Wärmeaustauschvorrichtung (1) nach einem der Ansprüche 1 bis 3, **dadurch gekennzeichnet, dass** das Geschwindigkeitsfeld des Blasfluids auf beiden Seiten der offenporigen Wand symmetrisch ist.

5. Wärmeaustauschvorrichtung nach einem der Ansprüche 1 bis 4, **dadurch gekennzeichnet, dass** wenigstens eine der Wände (4, 5) der Wärmeaustauschvorrichtung durch Sintern eines Metallpulvers erhalten wird.

6. Wärmeaustauschvorrichtung (1) nach Anspruch 5, **dadurch gekennzeichnet, dass** das Metallpulver auf Basis eines Pulvergemischs aus rostfreiem Stahl, aus Messing, aus Nickel, mit einer Korngröße von unter 100 µm und vorzugsweise im Bereich zwischen 10 und 80 µm ist.

7. Wärmeaustauschvorrichtung (1) nach Anspruch 6, **dadurch gekennzeichnet, dass** die Offenporigkeit in der Größenordnung von 17 % liegt.

8. Wärmeaustauschvorrichtung (1) nach einem der Ansprüche 1 bis 4, **dadurch gekennzeichnet, dass** wenigstens eine der Wände der Wärmeaustauschvorrichtung durch Schichten eines Metallgewebes erhalten wird.

9. Wärmeaustauschvorrichtung (1) nach Anspruch 8, **dadurch gekennzeichnet, dass** der Schichtverbund 3 bis 18, insbesondere 3 bis 6 Metallgewebeschichten umfasst.

10. Wärmeaustauschvorrichtung (1) nach einem der vorstehenden Ansprüche, **dadurch gekennzeichnet, dass** das Fluid Luft mit einem Druck zwischen 0,1 und 6 bar, vorzugsweise zwischen 0,2 und 4 bar ist.

11. Wärmeaustauschvorrichtung (1) nach einem der vorstehenden Ansprüche 1 bis 10, **dadurch gekennzeichnet, dass** das Blasfluid durch das Verdunsten eines anfangs in flüssigem Zustand vorliegenden Fluids innerhalb der Rippe (2) entsteht.

12. Wärmeaustauschvorrichtung (1) nach einem der vorstehenden Ansprüche, **dadurch gekennzeichnet, dass** die Wärmeaustauschvorrichtung mit einem Hilfskühlkreis ausgestattet ist.
